# EUROPEAN PATENT APPLICATION

(11) **EP 4 516 727 A1**
(43) Date of publication of application: **05.03.2025**
(21) Application number: 24196080.6
(22) Date of filing: 23.08.2024
(51) Int. Cl.: C01B 3/00, C22C 1/10, C22C 23/02

(54) **MAGNESIUM-BASED COMPOSITE MATERIAL AND METHOD OF FORMING THE SAME**

(30) Priority: 01.09.2023 US 202318459435
(71) Applicant: ATW Technology Inc., New Taipei City Taiwan 238005 (TW)
(72) Inventor: HUANG, Song-Jeng, TAIPEI CITY (TW); RAJAGOPAL, Veeramanikandan, TAIPEI CITY (TW)
(74) Representative: Berggren Oy

(57) **Abstract**

The present disclosure provides a magnesium-based composite material and a method of forming the same. The method includes performing a casting process on magnesium, at least one first catalytic metal, and at least one first carbon allotrope to form a first magnesium-based solid solution; performing a severe plastic deformation on the first magnesium-based solid solution to form a second magnesium-based solid solution; and performing a high energy ball milling process on the second magnesium-based solid solution and an amorphous additive to form the magnesium-based composite material. The magnesium-based composite material includes a magnesium-based solid solution and the amorphous additive mixed with the magnesium-based solid solution. The magnesium-based solid solution includes magnesium, at least one first catalytic metal and at least one first carbon allotrope. The amorphous additive includes at least one second catalytic metal and at least one second carbon allotrope.

## Description

### BACKGROUND

### Field of Invention

The present disclosure relates to a magnesium-based composite material and a method of forming the same.

### Description of Related Art

Hydrogen energy can be a carbon-free energy for avoiding carbon emission to endanger the climate. More applications depending on the fossil fuels have been replaced with hydrogen energy, for example, the rising population of the hydrogen-powered vehicles. A proper hydrogen carrier, therefore, to store and release the hydrogen has become the main topic of the area. However, a hydrogen carrier and a method of forming the same to include better hydrogenation and dehydrogenation properties, such as high reversible capacity, rate, and so on, are still lacking. Therefore, a material of a better hydrogen carrier and the method of forming the same are highly required.

### SUMMARY

The present disclosure provides a magnesium-based composite material. The magnesium-based composite material includes a magnesium-based solid solution and an amorphous additive mixed with the magnesium-based solid solution. The magnesium-based solid solution includes magnesium, at least one first catalytic metal selected from the group consisting of aluminum, zinc, zirconium, nickel, titanium, vanadium, chromium, cobalt, iron, copper, molybdenum, niobium, palladium, and yttrium, and at least one first carbon allotrope. The amorphous additive includes at least one second catalytic metal selected from the group consisting of zirconium, nickel, titanium, vanadium, chromium, cobalt, iron, copper, molybdenum, niobium, palladium, and yttrium, and at least one second carbon allotrope.

In some embodiments, a weight percentage of the amorphous additive in the magnesium-based composite material is from 1 wt% to 15 wt%.

In some embodiments, a weight percentage of each one of the at least one first catalytic metal in the magnesium-based solid solution is smaller than or equal to 9 wt%.

In some embodiments, when the at least one first catalytic metal includes aluminum, a weight percentage of aluminum among the at least one first catalytic metal is the largest.

In some embodiments, the at least one first carbon allotrope and the at least one second carbon allotrope are independently selected from the group consisting of graphite, graphene, fullerene, single-walled carbon nanotubes, multi-walled carbon nanotubes, activated carbon, and carbon black.

In some embodiments, a weight percentage of the at least one first carbon allotrope in the magnesium-based solid solution is smaller than or equal to 3 wt%.

In some embodiments, in the amorphous additive, a weight percentage of the at least one second carbon allotrope is larger than a weight percentage of the at least one second catalytic metal.

In some embodiments, an average particle size of the magnesium-based composite material is from 20 µm to 80 µm.

In some embodiments, an average grain size within the magnesium-based solid solution is from 4 µm to 34 µm.

In some embodiments, a maximum reversible hydrogen storage capacity of the magnesium-based composite material is from 6 wt% to 7 wt%.

In some embodiments, a hydrogen absorption rate of the magnesium-based composite material is from 2 wt% per minute to 4 wt% per minute, and a hydrogen desorption rate of the magnesium-based composite material is from 0.25 wt% per minute to 1.25 wt% per minute.

The present disclosure also provides a method of forming magnesium-based composite material. The method includes the following operations. A casting process is performed on magnesium, at least one first catalytic metal, and at least one first carbon allotrope to form a first magnesium-based solid solution, in which the at least one first catalytic metal is selected from the group consisting of aluminum, zinc, zirconium, nickel, titanium, vanadium, chromium, cobalt, iron, copper, molybdenum, niobium, palladium, and yttrium. A severe plastic deformation process is performed on the first magnesium-based solid solution to form a second magnesium-based solid solution. A high energy ball milling process is performed on the second magnesium-based solid solution and an amorphous additive to form the magnesium-based composite material, in which the amorphous additive includes at least one second catalytic metal and at least one second carbon allotrope, and the at least one second catalytic metal is selected from the group consisting of zirconium, nickel, titanium, vanadium, chromium, cobalt, iron, copper, molybdenum, niobium, palladium, and yttrium.

In some embodiments, the casting process includes heating magnesium, the at least one first catalytic metal, and the at least one first carbon allotrope at a temperature from 700 °C to 800 °C.

In some embodiments, the method further includes performing a homogenization process after the casting process and before the severe plastic deformation process, in which the homogenization process includes heating the first magnesium-based solid solution at a temperature from 350 °C to 450 °C.

In some embodiments, an average first grain size within the first magnesium-based solid solution is larger than an average second grain size within the second magnesium-based solid solution, and the average second grain size is from 4 µm to 34 µm.

In some embodiments, the severe plastic deformation process includes pressing the first magnesium-based solid solution to pass through an angled channel, and the angled channel has a bent angle from 90° to 120°.

In some embodiments, the severe plastic deformation process includes repeatedly pressing the first magnesium-based solid solution to pass through an angled channel, and the first magnesium-based solid solution is substantially not rotated, rotated with 90°, or rotated with 180° along a long axis of the first magnesium-based solid solution between two contiguous passes.

In some embodiments, the severe plastic deformation process includes repeatedly pressing the first magnesium-based solid solution to pass through an angled channel, and a repeat number is from 4 times to 8 times.

In some embodiments, the high energy ball milling process is performed by a high energy ball milling machine, and a rotating speed of the high energy ball milling machine is from 200 rpm to 500 rpm.

In some embodiments, an average particle size of the magnesium-based composite material is from 20 µm to 80 µm.

### BRIEF DESCRIPTION OF THE DRAWINGS

The present disclosure can be more fully understood by reading the following detailed description of the embodiments and the reference of the following figures.
Fig. 1 is a flowchart of a method of forming magnesium-based composite material according to some embodiments of the present disclosure.
Figs. 2A, 2B, 2C, and 2D are the schematics of the severe plastic deformation process according to some embodiments of the present disclosure.
Figs. 3A, 3B, and 3C are the optical microscopy images of the magnesium-based solid solution after the casting process, the homogenization process, and the severe plastic deformation process, respectively, according to some embodiments of the present disclosure.
Figs. 4A and 4B are the scanning electron microscopy images of the magnesium-based composite material during and after the high energy ball milling process, respectively, according to some embodiments of the present disclosure.
Fig. 5 is the comparison of the X-ray diffraction spectra according to some embodiments and some comparative embodiments of the present disclosure.
Figs. 6A and 6B are the diagrams of hydrogen absorption and desorption capacities changing with time according to some embodiments and some comparative embodiments of the present disclosure.

### DETAILED DESCRIPTION

The present disclosure provides a magnesium-based composite material. The magnesium-based composite material includes a magnesium-based solid solution and an amorphous additive mixed with the magnesium-based solid solution. The magnesium-based solid solution includes magnesium, at least one first catalytic metal selected from the group consisting of aluminum, zinc, zirconium, nickel, titanium, vanadium, chromium, cobalt, iron, copper, molybdenum, niobium, palladium, and yttrium, and at least one first carbon allotrope. The amorphous additive includes at least one second catalytic metal selected from the group consisting of zirconium, nickel, titanium, vanadium, chromium, cobalt, iron, copper, molybdenum, niobium, palladium, and yttrium, and at least one second carbon allotrope. The magnesium-based composite material of the present disclosure can be a hydrogen carrier and has better hydrogenation and dehydrogenation properties including a higher reversible hydrogen storage capacity (e.g., 6 wt% to 7 wt%), a higher hydrogen absorption rate (e.g., 2 wt% per minute to 4 wt% per minute), a higher hydrogen desorption rate (e.g., 0.25 wt% per minute to 1.25 wt% per minute), a lower working temperature (e.g., 300 °C to 400 °C), and so on. The magnesium-based composite material of the present disclosure is described in detail in the following embodiments.

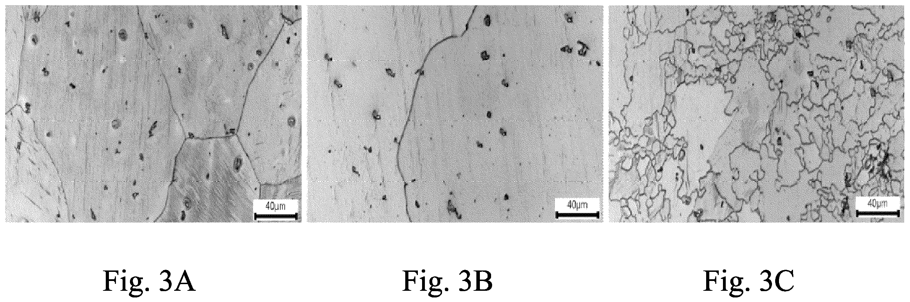

The magnesium-based composite material of the present disclosure is a composite material that includes the magnesium-based solid solution and the amorphous additive. The magnesium-based solid solution and the amorphous additive have distinct characteristics. For example, the magnesium-based solid solution is a solid solution that includes a homogeneous mixture of magnesium, the at least one first catalytic metal, and the at least one first carbon allotrope in the solid state, and the magnesium-based solid solution has a crystal structure. On the other hand, the amorphous additive is amorphous, non-crystalline, and disordered in the atomic-scale structure. The magnesium-based composite material including the magnesium-based solid solution and the amorphous additive mixed together improves the hydrogenation and dehydrogenation properties of the magnesium-based composite material. For example, the hydrogen diffusion paths in the magnesium-based composite material are shorted, a desired extent of structural defects is included to reduce the activation barrier of hydrogen dissociation, and so on. In some embodiments, the magnesium-based solid solution has a single crystal structure. In some embodiments, the crystal structure of the magnesium-based solid solution is hexagonal close-packed (HCP). In some embodiments, an average grain size of the crystal structure of the magnesium-based solid solution is from 4 µm to 34 µm, for example, 4 µm, 9 µm, 14 µm, 19 µm, 24 µm, 29 µm, or 34 µm. The grain size is a volume of the crystal structure where the crystal orientation is substantially the same (see Figs. 3A, 3B, and 3C, for example), so the boundary between the grains refers to the change of crystal orientation. Smaller grain size means more boundaries between grains, and the average grain size within the foregoing range provides suitable defects in the microstructure to maintain high hydrogen storage capacity and reduce the activation barrier for hydrogen dissociation. In some embodiments, a weight percentage of the magnesium-based solid solution and a weight percentage of the amorphous additive in the magnesium-based composite material are respectively preferably from 85 wt% to 99 wt% (e.g., 85 wt%, 87 wt%, 89 wt%, 91 wt%, 93 wt%, 95 wt%, 97 wt%, or 99 wt%) and from 1 wt% to 15 wt% (e.g., 1 wt%, 3 wt%, 5 wt%, 7 wt%, 9 wt%, 11 wt%, 13 wt%, or 15 wt%).

The magnesium-based composite material of the present disclosure is further described in detail according to some embodiments. In some embodiments, the magnesium-based composite material is in particles to increase the surface area of the magnesium-based composite material. The larger surface area improves the hydrogenation and dehydrogenation properties by, for example, having more magnesium nucleation sites and shorter hydrogen diffusion paths when the composition and decomposition of magnesium hydride are happening, thereby increasing the hydrogen absorption and desorption rate. In addition, for the magnesium-based composite material having the larger surface area, lesser deformation may occur during the composition and decomposition of magnesium hydride to reduce the decrepitation to happen when heating the magnesium-based composite material. In some embodiments, a preferable average particle size of the magnesium-based composite material having improved hydrogenation and dehydrogenation properties is from 20 µm to 80 µm, for example, 20 µm, 25 µm, 30 µm, 35 µm, 40 µm, 50 µm, 60 µm, 70 µm, or 80 µm.

The magnesium-based composite material of the present disclosure is further described in detail according to some embodiments. In some embodiments, the maximum reversible (i.e., hydrogen may be absorbed and desorbed reversibly) hydrogen storage capacity of the magnesium-based composite material is from 6 wt% to 7 wt%, for example, 6.0 wt%, 6.2 wt%, 6.4 wt%, 6.6 wt%, 6.8 wt%, or 7.0 wt%. In some embodiments, the hydrogen absorption rate of the magnesium-based composite material is from 2 wt% per minute to 4 wt% per minute, for example, 2.0 wt% per minute, 2.5 wt% per minute, 3.0 wt% per minute, 3.5 wt% per minute, or 4.0 wt% per minute. In some embodiments, the hydrogen desorption rate of the magnesium-based composite material is from 0.25 wt% per minute to 1.25 wt% per minute, for example, 0.25 wt% per minute, 0.50 wt% per minute, 0.75 wt% per minute, 1.00 wt% per minute, or 1.25 wt% per minute. In some embodiments, the maximum reversible hydrogen storage capacity, the hydrogen absorption rate, and the hydrogen desorption rate are measured at the working temperature from 300 °C to 400 °C, for example, 300 °C, 320 °C, 340 °C, 360 °C, 380 °C, or 400 °C, and at the hydrogen pressure from 2.5 MPa to 3.5 MPa, for example, 2.5 MPa, 2.7 MPa, 2.9 MPa, 3.1 MPa, 3.3 MPa, or 3.5 MPa.

Next, the magnesium-based solid solution is described in detail according to some embodiments. The magnesium-based solid solution includes magnesium, the at least one first catalytic metal, and the at least one first carbon allotrope, in which magnesium has high hydrogen storage capacity, the at least one first catalytic metal is a catalyst to improve the dissociation of hydrogen from magnesium, and the at least one first carbon allotrope provides a larger surface area to improve the kinetic rate of hydrogen absorption and desorption. In some embodiments, a weight percentage of magnesium in the magnesium-based solid solution is preferably larger than or equal to 85 wt% to maintain high hydrogen storage capacity and increase the homogeneity of the solid solution. In some embodiments, the at least one first catalytic metal is preferably selected from the group consisting of aluminum, zinc, zirconium, nickel, titanium, vanadium, chromium, cobalt, iron, copper, molybdenum, niobium, palladium, and yttrium. In some embodiments, a weight percentage of each one of the at least one first catalytic metal in the magnesium-based solid solution is preferably smaller than or equal to 9 wt% to improve the catalytic effect and increase the homogeneity of the solid solution. In some embodiments, the at least one first carbon allotrope is preferably selected from the group consisting of graphite, graphene, fullerene, single-walled carbon nanotubes, multi-walled carbon nanotubes, activated carbon, and carbon black. In some embodiments, a weight percentage of the at least one first carbon allotrope in the magnesium-based solid solution is preferably smaller than or equal to 3 wt% to improve the kinetic rate and increase the homogeneity of the solid solution.

The magnesium-based solid solution of the present disclosure is further described in detail according to some embodiments. In some embodiments, a weight percentage of aluminum among the at least one first catalytic metal is the largest to have a better catalytic effect. In some embodiments, the weight percentage of aluminum in the magnesium-based solid solution is preferably from 3 wt% to 9 wt%, for example, 3 wt%, 4 wt%, 5 wt%, 6 wt%, 7 wt%, 8 wt%, or 9 wt%. In some embodiments, the weight percentage of zinc in the magnesium-based solid solution is preferably from 0.5 wt% to 6 wt%, for example, 0.5 wt%,1 wt%, 2 wt%, 3 wt%, 4 wt%, 5 wt%, or 6 wt%. In some embodiments, the weight percentage of zirconium in the magnesium-based solid solution is preferably from 0.1 wt% to 1.6 wt%, for example, 0.1 wt%, 0.6 wt%, 1.0 wt%, 1.3 wt%, or 1.6 wt%. In some embodiments, the weight percentage of nickel, titanium, vanadium, chromium, cobalt, iron, copper, molybdenum, niobium, palladium, or yttrium in the magnesium-based solid solution are each independently preferably from 0.1 wt% to 1 wt%, for example, 0.1 wt%, 0.25 wt%, 0.5 wt%, 0.75 wt%, or 1 wt%. More specifically, in some embodiments, the at least one first catalytic metal includes aluminum, zinc, and at least one selected from the group consisting of zirconium, nickel, titanium, vanadium, chromium, cobalt, iron, copper, molybdenum, niobium, palladium, and yttrium, in which a preferable weight ratio between aluminum and zinc is from 3:1 to 9:1, for example , 3:1, 6:1, or 9:1. More specifically, in some embodiments, the at least one first catalytic metal includes zinc, zirconium, and at least one selected from the group consisting of nickel, titanium, vanadium, chromium, cobalt, iron, copper, molybdenum, niobium, palladium, and yttrium, in which a preferable weight ratio between zinc and zirconium is from 3:1 to 60:1, for example , 3:1, 5:1, 10:1, 20:1, 30:1, 40:1, 50:1, or 60:1. The at least one first catalytic metal including aluminum and zinc, or including zinc and zirconium, further improves the mechanical properties (e.g., a higher tensile strength, a higher yield strength, etc.), increases the corrosion resistance, and favors the application (e.g., better welding characteristics, etc.) of the magnesium-based solid solution. In some embodiments, the weight percentage of the at least one first carbon allotrope in the magnesium-based solid solution is preferably from 1 wt% to 3 wt%, for example, 1.0 wt%, 1.5 wt%, 2.0 wt%, 2.5 wt%, or 3.0 wt%. In some embodiments, the at least one first carbon allotrope includes multi-walled carbon nanotubes, and each of the multi-walled carbon nanotubes has the density preferably from 0.01 g/cm³ to 0.1 g/cm³, for example, 0.01 g/cm³, 0.04 g/cm³, 0.06 g/cm³, 0.08 g/cm³, or 0.10 g/cm³.

Next, the amorphous additive is described in detail according to some embodiments. The amorphous additive includes the at least one second catalytic metal and the at least one second carbon allotrope, in which the at least one second catalytic metal is a catalyst to improve the dissociation of hydrogen from magnesium, and the at least one second carbon allotrope provides a larger surface area to improve the kinetic rate of hydrogen absorption and desorption. In some embodiments, the at least one second catalytic metal is preferably selected from the group consisting of zirconium, nickel, titanium, vanadium, chromium, cobalt, iron, copper, molybdenum, niobium, palladium, and yttrium. In some embodiments, a weight percentage of the at least one second catalytic metal in the amorphous additive is preferably from 35 wt% to 45 wt%, for example, 35 wt%, 37 wt%, 40 wt%, 43 wt%, or 45 wt% to improve the catalytic effect. In some embodiments, the at least one second carbon allotrope is preferably selected from the group consisting of graphite, graphene, fullerene, single-walled carbon nanotubes, multi-walled carbon nanotubes, activated carbon, and carbon black. In some embodiments, a weight percentage of the at least one second carbon allotrope in the amorphous additive is preferably from 55 wt% to 65 wt%, for example, 55 wt%, 57 wt%, 60 wt%, 63 wt%, or 65 wt% to improve the kinetic rate. In some embodiments, the at least one first carbon allotrope and the at least one second carbon allotrope are the same. In some embodiments, the at least one first carbon allotrope and the at least one second carbon allotrope are different. In some embodiments, the weight percentage of the at least one second carbon allotrope is larger than the weight percentage of the at least one second catalytic metal to favor the production of the magnesium-based composite material in particles and the production of the desired structural defects in the magnesium-based composite material (for detail, see the method of forming the magnesium-based composite material below). In some embodiments, a preferable weight ratio between the at least one second carbon allotrope and the at least one second catalytic metal is from 1.1:1 to 2.5:1, for example, 1.1:1, 1.3:1, 1.5:1, 1.7:1, 1.9:1, 2.1:1, 2.3:1, or 2.5:1.

The present disclosure also provides a method of forming the foregoing magnesium-based composite material. The method includes the following operations. A casting process is performed on magnesium, the at least one first catalytic metal, and the at least one first carbon allotrope to form a first magnesium-based solid solution, in which the at least one first catalytic metal is selected from the group consisting of aluminum, zinc, zirconium, nickel, titanium, vanadium, chromium, cobalt, iron, copper, molybdenum, niobium, palladium, and yttrium. A severe plastic deformation process is performed on the first magnesium-based solid solution to form a second magnesium-based solid solution. A high energy ball milling process is performed on the second magnesium-based solid solution and the amorphous additive to form the magnesium-based composite material, in which the amorphous additive includes at least one second catalytic metal and at least one second carbon allotrope, and the at least one second catalytic metal is selected from the group consisting of zirconium, nickel, titanium, vanadium, chromium, cobalt, iron, copper, molybdenum, niobium, palladium, and yttrium. The magnesium-based composite material formed by the method of the present disclosure can be a hydrogen carrier and has better hydrogenation and dehydrogenation properties as described in the foregoing disclosure. Therefore, the details of the magnesium-based composite material may not be repeated in the following. Besides forming the magnesium-based composite material of the present disclosure, the method of the present disclosure is easy to implement and can perform mass production of the magnesium-based composite material. The method of the present disclosure is described in detail in the following embodiments.

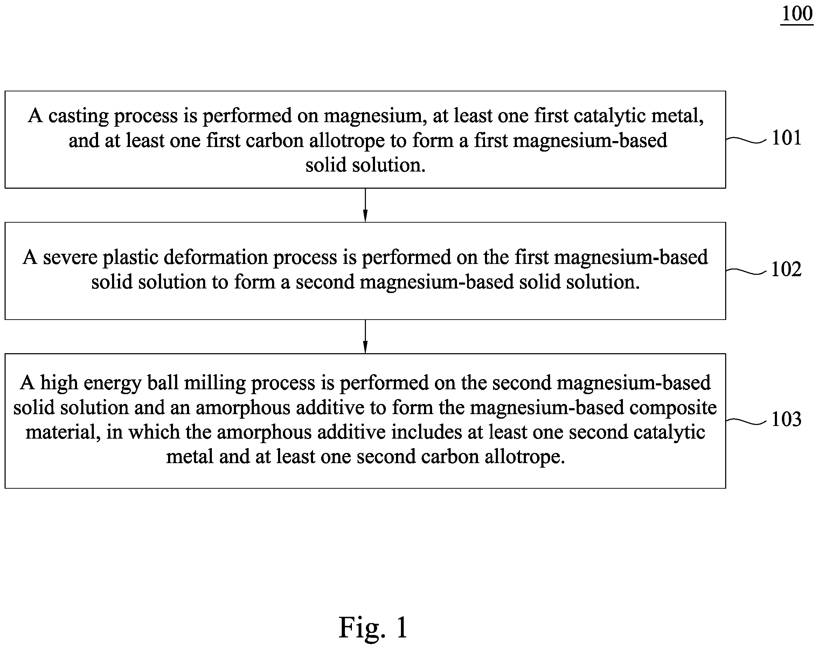

In the flowchart as shown in Fig. 1, the method 100 of the present disclosure includes an operation 101, in which the casting process is performed on magnesium, the at least one first catalytic metal, and the at least one first carbon allotrope to form the first magnesium-based solid solution. The first magnesium-based solid solution is substantially the same as the magnesium-based solid solution as described in the foregoing disclosure, except that, for example, the mechanical properties of the first magnesium-based solid solution may be different and the average first grain size of the crystal structure of the first magnesium-based solid solution may be larger (for detail, see the operation 102 below). In some embodiments, the average first grain size is from 90 µm to 150 µm, for example, 90 µm, 100 µm, 110 µm, 120 µm, 130 µm, 140 µm, or 150 µm. In some embodiments, the casting process includes heating magnesium, the at least one first catalytic metal, and the at least one first carbon allotrope at a temperature preferably from 700 °C to 800 °C, for example, 700 °C, 720 °C, 740 °C, 760 °C, 780 °C, or 800 °C to increase the homogeneity of the formed solid solution. In some embodiments, the casting process is performed by the induction furnace to increase the effectiveness of forming the solid solution and to promote mass production of the solid solution. In some embodiments, the casting process further includes stirring magnesium, the at least one first catalytic metal, and the at least one first carbon allotrope for a time period preferably from 10 minutes to 20 minutes, for example, 10 minutes, 15 minutes, or 20 minutes to increase the homogeneity of the formed solid solution. In some embodiments, the casting process is performed in an environment including sulfur hexafluoride (SF₆) and carbon dioxide (CO₂) as protective agents. In some embodiments, the casting process is performed in the environment further including argon to prevent the undesired oxidation. In some embodiments, the casting process further includes quenching at room temperature, for example, from 20 °C to 30 °C (e.g., 20 °C, 22 °C, 24 °C, 26 °C, 28 °C, or 30 °C) to solidify the first magnesium-based solid solution.

In some embodiments, the method 100 further includes performing a homogenization process after the operation 101 and before the operation 102. The homogenization process makes the brittle first magnesium-based solid solution formed after the operation 101 become more ductile. Therefore, the first magnesium-based solid solution that is more ductile is easier to be operated in the operation 102 to reduce the grain size of the first magnesium-based solid solution (for detail, see the operation 102 below). Furthermore, the homogenization process increases the homogeneity of the solid solution by reducing the fracture in the crystal structure of the first magnesium-based solid solution, so the second magnesium-based solid solution formed in the operation 102 not only has reduced grain size but the limited fracture to enhance the diffusion of the hydrogen in the solid solution. The crystal structure change after the operation 101, the homogenization process, and the operation 102 will be described in detail in an example as shown in Figs. 3A, 3B, and 3C. In some embodiments, the homogenization process includes heating the first magnesium-based solid solution at a temperature preferably from 350 °C to 450 °C (e.g., 350 °C, 370 °C, 390 °C, 410 °C, 430 °C, or 450 °C) for a time period preferably from 20 hours to 30 hours (e.g., 20 hours, 22 hours, 24 hours, 26 hours, 28 hours, or 30 hours). In some embodiments, the heating temperature of the homogenization process is lower than the heating temperature of the casting process in the operation 101. In some embodiments, the heating time of the homogenization process is longer than the heating time of the casting process in the operation 101.

In some embodiments, the method 100 further includes performing a water jet process after the operation 101 and before the operation 102. The water jet process includes slicing the first magnesium-based solid solution into bars to prepare the operation 102. For example, in the operation 102, each bar is pressed into an angled channel to adjust the mechanical properties and the grain size of the solid solution (for detail, see the operation 102 below). In some embodiments, the length of each bar is from 5 mm to 15 mm, e.g., 11.5 mm, the width of each bar is from 5 mm to 15 mm, e.g., 11.5 mm, and the height of each bar is from 70 mm to 80 mm, e.g., 75 mm.

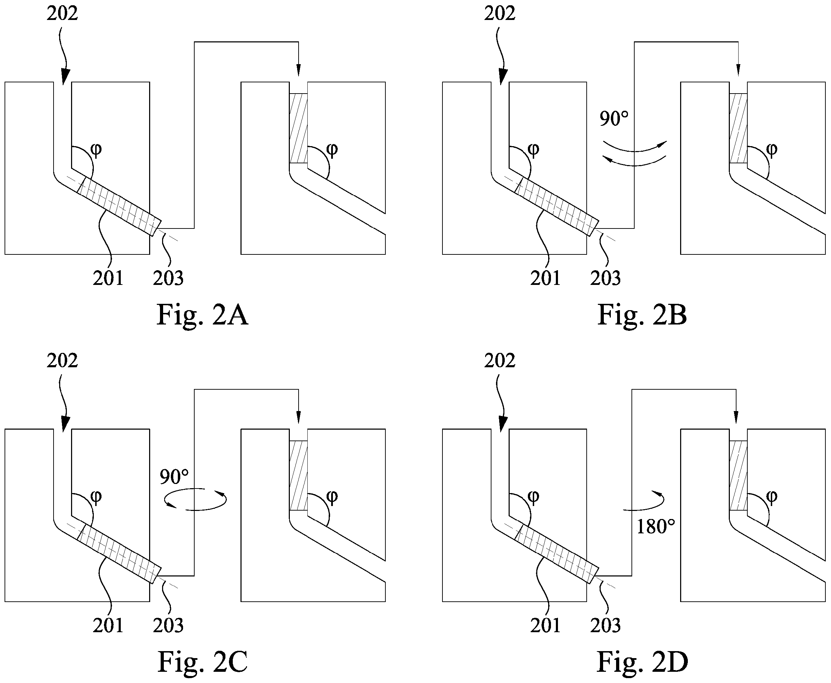

In the flowchart as shown in Fig. 1, the method 100 of the present disclosure includes an operation 102, in which the severe plastic deformation process is performed on the first magnesium-based solid solution to form the second magnesium-based solid solution. The second magnesium-based solid solution is substantially the same as the magnesium-based solid solution as described in the foregoing disclosure. For example, the average second grain size of the crystal structure of the second magnesium-based solid solution is substantially the same as the average grain size of the crystal structure of the magnesium-based solid solution and smaller than the average first grain size of the crystal structure of the first magnesium-based solid solution, as described in the foregoing disclosure. The severe plastic deformation creates strain on the first magnesium-based solid solution to change the mechanical properties of the first magnesium-based solid solution. As for the scale of the microstructure, the grain size of the first magnesium-based solid solution is reduced. Figs. 2A, 2B, 2C, and 2D are the examples of performing the severe plastic deformation process according to some embodiments. In Figs. 2A, 2B, 2C, and 2D, the severe plastic deformation process includes pressing the first magnesium-based solid solution 201 to pass through an angled channel 202. In some embodiments, the angled channel 202 is bent and has a bent angle ϕ preferably from 90° to 120°, for example, 90°, 100°, 110°, or 120°. In some embodiments, the severe plastic deformation process includes repeatedly pressing the first magnesium-based solid solution 201 to pass through the angled channel 202, and the first magnesium-based solid solution 201 is substantially not rotated (e.g., Fig. 2A), rotated with 90° (e.g., Figs. 2B and 2C), or rotated with 180° (e.g., Fig. 2D) along the long axis 203 of the first magnesium-based solid solution 201 between the two contiguous passes. The difference between Figs. 2B and 2C is that the rotation direction in Fig. 2B changes every time the first magnesium-based solid solution 201 is rotated, while the rotation direction in Fig. 2C maintains substantially the same. Specifically, in Fig. 2B, the rotation along the long axis 203 is clockwise after the first pass, but the rotation along the long axis changes to be anticlockwise after the second pass. Specifically, in Fig. 2C, the rotation along the long axis 203 keeps being clockwise or anticlockwise after each pass. In some embodiments, a repeat number to press the first magnesium-based solid solution 201 to pass through the angled channel 202 is preferably from 4 times to 8 times, for example, 4 times, 5 times, 6 times, 7 times, or 8 times. In some embodiments, the temperature to press the first magnesium-based solid solution 201 to pass through the angled channel 202 is preferably from 300 °C to 350 °C, for example, 300 °C, 310 °C, 320 °C, 330 °C, 340 °C, or 350 °C. In some embodiments, the load applied to press the first magnesium-based solid solution 201 to pass through the angled channel 202 is preferably from 150 kg to 250 kg, for example, 150 kg, 170 kg, 190 kg, 210 kg, 230 kg, or 250 kg. In some embodiments, the velocity to press the first magnesium-based solid solution 201 to pass through the angled channel 202 is preferably from 0.5 mm/s to 2.0 mm/s, for example, 0.5 mm/s, 1.0 mm/s, 1.5 mm/s, or 2.0 mm/s.

In some embodiments, the method 100 further includes performing a rasping process after the operation 102 and before the operation 103. The rasping process includes rasping the second magnesium-based solid solution into particles manually to prepare the operation 103. In some embodiments, a particle size of the second magnesium-based solid solution after the rasping process is preferably from 80 µm to 120 µm, for example, 80 µm, 90 µm, 100 µm, 110 µm, or 120 µm.

In the flowchart as shown in Fig. 1, the method 100 of the present disclosure includes an operation 103, in which the high energy ball milling process is performed on the second magnesium-based solid solution and the amorphous additive to form the magnesium-based composite material. In addition to being beneficial for better hydrogenation and dehydrogenation properties as described in the foregoing disclosure, the amorphous additive contributes to better acquiring the microstructure of the magnesium-based composite material in the operation 103, for example, a desired average particle size as described in the foregoing disclosure. In some embodiments, the high energy ball milling process is performed by a high energy ball milling machine (e.g., a planetary ball mill machine) to grind and blend the second magnesium-based solid solution and the amorphous additive. In some embodiments, the high energy ball milling machine includes grinding balls in the grinding jars to impact with the second magnesium-based solid solution and the amorphous additive to reduce the particle size. In some embodiments, the grinding balls are preferably steel balls. In some embodiments, a weight ratio between the weight of the grinding balls and the total weight of the second magnesium-based solid solution and the amorphous additive is preferably 30:1 to 50:1, for example, 30:1, 40:1, or 50:1. In some embodiments, a rotating speed of the high energy ball milling machine is preferably from 200 rpm to 500 rpm, for example, 200 rpm, 300 rpm, 400 rpm, or 500 rpm to exert a centrifugal force on the grinding balls, the second magnesium-based solid solution, and the amorphous additive to increase the impact energy on the second magnesium-based solid solution and the amorphous additive. In some embodiments, a total rotating time of the high energy ball milling machine is preferably from 4 hours to 16 hours, for example, 4 hours, 6 hours, 8 hours, 10 hours, 12 hours, 14 hours, or 16 hours. In some embodiments, the rotating direction changes every 30 minutes and with a 10 minutes break before the next rotation, for example, rotating clockwise for 30 minutes, staying still for 10 minutes, and then rotating anticlockwise for 30 minutes, etc.

The magnesium-based composite material and the method of forming the same are described in detail in the following embodiments. The following embodiments are aimed at a better understanding of the present disclosure rather than limiting the scope of the present disclosure.

In the Embodiment 1, the magnesium-based composite material includes 96 wt% of the magnesium-based solid solution and 4 wt% of the amorphous additive, in which the magnesium-based solid solution includes 92.5 wt% of magnesium, 3 wt% of aluminum, 1 wt% of zinc, 0.5 wt% of titanium, and 3 wt% multi-walled carbon nanotubes (the density of each multi-walled carbon nanotube is around 0.057 g/cm³), and the amorphous additive includes 40 wt% of nickel and 60 wt% of graphene. Magnesium, aluminum, zinc, titanium, and the multi-walled carbon nanotubes were heated at 760 °C and stirred for 15 minutes in the casting process of the operation 101 to obtain the first magnesium-based solid solution. The first magnesium-based solid solution was heated at 410 °C for 24 hours in the homogenization process. The first magnesium-based solid solution was sliced into bars of 11.5 mm length, 11.5 mm width, and 75 mm height in the water jet process. The first magnesium-based solid solution was press to pass through an angled channel of a bent angle of 120° with a load of 210 kg and a velocity of 1.0 mm/s in the severe plastic deformation process of the operation 102. The second magnesium-based solid solution obtained from the operation 102 was mixed with nickel and graphene in the high energy ball milling process of the operation 103. The weight ratio between the weight of the steel balls and the total weight of the second magnesium-based solid solution, nickel, and graphene in the grinding jars of the high energy ball milling machine was 40:1, in which the rotating speed of the high energy ball milling machine was 400 rpm, and the rotating direction changed every 30 minutes and with a 10 minutes break before the next rotation.

Figs. 3A, 3B, and 3C are the optical microscopy images of the magnesium-based solid solution of the Embodiment 1 after the operation 101, the homogenization process, and the operation 102, respectively. Figs. 3A, 3B, and 3C show clearly the lamellar eutectic crystal structure of the solid solution. Among them, the fracture of the crystal structure shown in Fig. 3B reduces compared with that shown in Fig. 3A. Therefore, the fracture produced after the operation 102 is limited compared with the method without performing the homogenization process. In addition, the grain size of the crystal structure shown in Fig. 3C reduces compared with those shown in Figs. 3A and 3B.

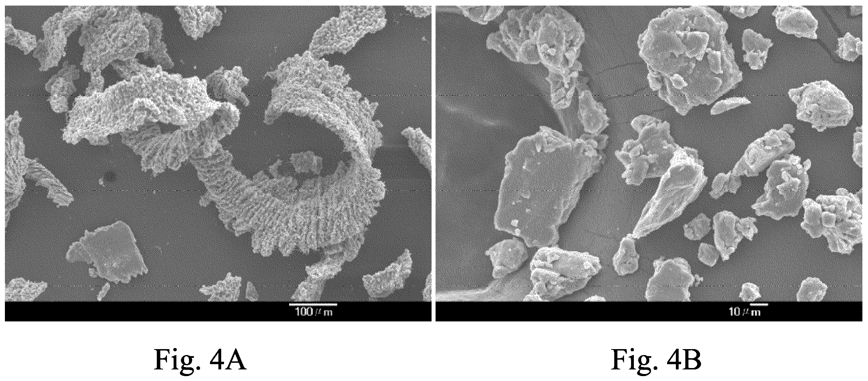

Figs. 4A and 4B are the scanning electron microscopy images of the magnesium-based composite material of the Embodiment 1 during and after the high energy ball milling process, respectively. The particles had serrated shapes during the high energy ball milling process and became highly dispersed with the desired particle size after the high energy ball milling process.

The Embodiment 1 was compared with a Comparative Embodiment 1. The Comparative Embodiment 1 is substantially the same as the Embodiment 1, except that the Comparative Embodiment 1 did not include the operation 102 and the operation 103, while the Embodiment 1 includes the operation 101, the operation 102, and the operation 103. In other words, the Comparative Embodiment 1 forms the first magnesium-based solid solution only, and the Embodiment 1 forms the magnesium-based composite material.

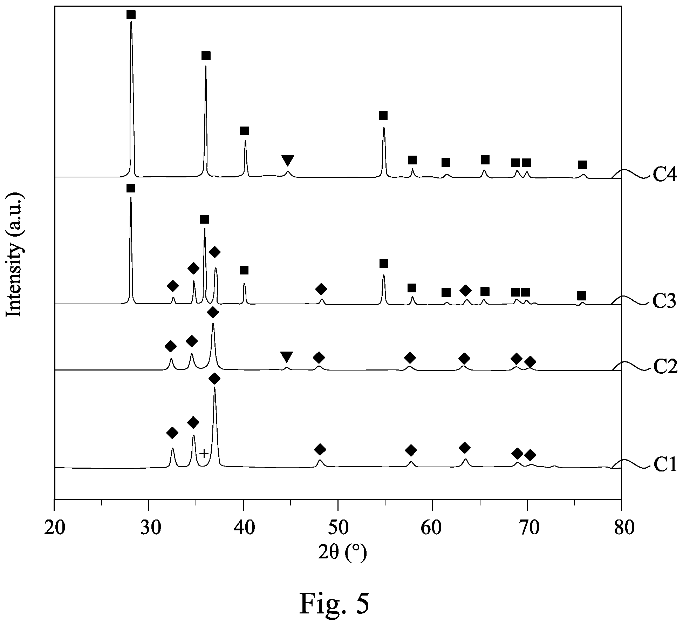

Fig. 5 is the comparison of the X-ray diffraction spectra of the Comparative Embodiment 1 and the Embodiment 1, in which the curve C1 and the curve C3 are respectively the X-ray diffraction spectrum of the first magnesium-based solid solution before and after the hydrogenation in the Comparative Embodiment 1, and the curve C2 and the curve C4 are respectively the X-ray diffraction spectrum of the magnesium-based composite material before and after the hydrogenation in the Embodiment 1. The symbols +, ┼, ▼, and ■ in Fig. 5 respectively represent the location of the peak referring to Mg, Al₁₂Mg₁₇, Ni, and MgH₂. Before the hydrogenation, the peaks of the curve C2 are broader than the peaks of the curve C1, and the peaks of the curve C2 include the peak referring to Ni. After the hydrogenation, the curve C4 show stronger peaks of MgH₂ compared with those in the curve C3, and Mg in the Embodiment 1 is substantially completely transformed into MgH₂.

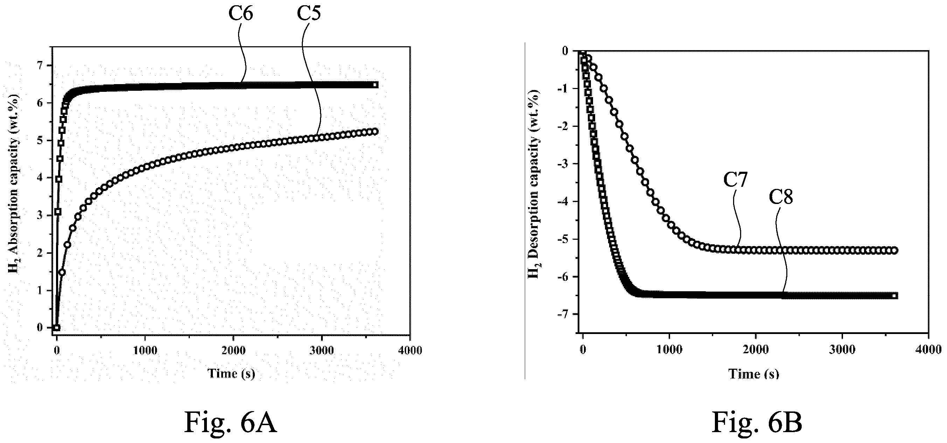

Figs. 6A and 6B are the comparisons of the hydrogen absorption and desorption capacities changing with time at the working temperature of 350 °C, at the hydrogen pressure of 3 MPa, and measured with the Sievert type constant volume equipment, in which the curve C5 and the curve C7 refer to the Comparative Embodiment 1, and the curve C6 and the curve C8 refer to the Embodiment 1. The maximum reversible hydrogen storage capacity of the Embodiment 1 (e.g., around 6.48 wt %) is much higher than the maximum reversible hydrogen storage capacity of the Comparative Embodiment 1 (e.g., around 5.24 wt %). In addition, the hydrogen absorption rate of the Embodiment 1 (e.g., around 3.4614 wt % per minute) is much faster than the hydrogen absorption rate of the Comparative Embodiment 1 (e.g., around 0.0873 wt % per minute), and the hydrogen desorption rate of the Embodiment 1 (e.g., around 0.7660 wt % per minute) is much faster than the hydrogen desorption rate of the Comparative Embodiment 1 (e.g., around 0.1638 wt % per minute).

The average grain sizes of the magnesium-based solid solution in the Embodiments 2A to 2H, the Comparative Embodiment 2I, the Embodiments 3A to 3H, and the Comparative Embodiment 3I are compared in Table 1 below. The Embodiments 2A to 2H are substantially the same as the Embodiment 1 described above, except that the operation 102 in each embodiment is different. For example, the Embodiments 2A to 2B are performed as the operation shown in Fig. 2A, in which the repeat number of the Embodiments 2A is 4 and the repeat number of the Embodiments 2B is 8; the Embodiments 2C to 2D are performed as the operation shown in Fig. 2B, in which the repeat number of the Embodiments 2C is 4 and the repeat number of the Embodiments 2D is 8; the Embodiments 2E to 2F are performed as the operation shown in Fig. 2C, in which the repeat number of the Embodiments 2E is 4 and the repeat number of the Embodiments 2F is 8; and the Embodiments 2G to 2H are performed as the operation shown in Fig. 2D, in which the repeat number of the Embodiments 2G is 4 and the repeat number of the Embodiments 2H is 8. The Comparative Embodiments 2I is substantially the same as the Embodiment 1 described above, except that the repeat number of passing through the angled channel in the operation 102 is only 1. The Embodiments 2A to 2H have desirable and smaller average grain sizes than the Comparative Embodiment 2I. The Embodiments 3A to 3H are respectively substantially the same as the Embodiments 2A to 2H, except that the weight percentages of magnesium and aluminum are different, in which in the Embodiments 3A to 3H, the weight percentage of magnesium is 89.5 wt% and the weight percentage of aluminum is 6 wt%. The Comparative Embodiments 3I is also substantially the same as the Comparative Embodiment 2I, except that in the Comparative Embodiments 3I, the weight percentage of magnesium is 89.5 wt% and the weight percentage of aluminum is 6 wt%. The Embodiments 3A to 3H also have desirable and smaller average grain sizes than the Comparative Embodiment 3I.

**Table 1**

| | average grain size (µm) |
|---|---|
| Embodiment 2A | 12.96 |
| Embodiment 2B | 7.89 |
| Embodiment 2C | 10.37 |
| Embodiment 2D | 7.66 |
| Embodiment 2E | 8.62 |
| Embodiment 2F | 4.99 |
| Embodiment 2G | 8.90 |
| Embodiment 2H | 6.80 |
| Comparative Embodiment 2I | 36.81 |
| Embodiment 3A | 31.87 |
| Embodiment 3B | 24.09 |
| Embodiment 3C | 33.82 |
| Embodiment 3D | 20.78 |
| Embodiment 3E | 18.11 |
| Embodiment 3F | 10.61 |
| Embodiment 3G | 20.51 |
| Embodiment 3H | 11.20 |
| Comparative Embodiment 3I | 66.69 |

The magnesium-based composite material of the present disclosure and the magnesium-based composite material formed by the method of the present disclosure have better hydrogenation and dehydrogenation properties including higher reversible hydrogen storage capacities, higher hydrogen absorption rates, higher hydrogen desorption rates, lower working temperatures, and so on. The method of the present disclosure is also easy to implement, can perform mass production, and the materials are easy to acquire.

## Claims

1. A magnesium-based composite material, comprising:
a magnesium-based solid solution, comprising:
magnesium;
at least one first catalytic metal selected from the group consisting of aluminum, zinc, zirconium, nickel, titanium, vanadium, chromium, cobalt, iron, copper, molybdenum, niobium, palladium, and yttrium; and
at least one first carbon allotrope; and
an amorphous additive mixed with the magnesium-based solid solution, wherein the amorphous additive comprises:
at least one second catalytic metal selected from the group consisting of zirconium, nickel, titanium, vanadium, chromium, cobalt, iron, copper, molybdenum, niobium, palladium, and yttrium; and
at least one second carbon allotrope.

2. The magnesium-based composite material of claim 1, wherein a weight percentage of the amorphous additive in the magnesium-based composite material is from 1 wt% to 15 wt%.

3. The magnesium-based composite material of any one of claims 1 to 2, wherein a weight percentage of each one of the at least one first catalytic metal in the magnesium-based solid solution is smaller than or equal to 9 wt%.

4. The magnesium-based composite material of any one of claims 1 to 3, wherein the at least one first carbon allotrope and the at least one second carbon allotrope are independently selected from the group consisting of graphite, graphene, fullerene, single-walled carbon nanotubes, multi-walled carbon nanotubes, activated carbon, and carbon black.

5. The magnesium-based composite material of any one of claims 1 to 4, wherein a weight percentage of the at least one first carbon allotrope in the magnesium-based solid solution is smaller than or equal to 3 wt%.

6. The magnesium-based composite material of any one of claims 1 to 5, wherein, in the amorphous additive, a weight percentage of the at least one second carbon allotrope is larger than a weight percentage of the at least one second catalytic metal.

7. The magnesium-based composite material of any one of claims 1 to 6, wherein an average particle size of the magnesium-based composite material is from 20 µm to 80 µm.

8. The magnesium-based composite material of any one of claims 1 to 7, wherein an average grain size within the magnesium-based solid solution is from 4 µm to 34 µm.

9. A method (100) of forming magnesium-based composite material, comprising:
performing a casting process on magnesium, at least one first catalytic metal, and at least one first carbon allotrope to form a first magnesium-based solid solution (201), wherein the at least one first catalytic metal is selected from the group consisting of aluminum, zinc, zirconium, nickel, titanium, vanadium, chromium, cobalt, iron, copper, molybdenum, niobium, palladium, and yttrium;
performing a severe plastic deformation process on the first magnesium-based solid solution (201) to form a second magnesium-based solid solution; and
performing a high energy ball milling process on the second magnesium-based solid solution and an amorphous additive to form the magnesium-based composite material, wherein the amorphous additive comprises at least one second catalytic metal and at least one second carbon allotrope, and the at least one second catalytic metal is selected from the group consisting of zirconium, nickel, titanium, vanadium, chromium, cobalt, iron, copper, molybdenum, niobium, palladium, and yttrium.

10. The method (100) of claim 9, wherein the casting process comprises heating magnesium, the at least one first catalytic metal, and the at least one first carbon allotrope at a temperature from 700 °C to 800 °C.

11. The method (100) of any one of claims 9 to 10, further comprising performing a homogenization process after the casting process and before the severe plastic deformation process, wherein the homogenization process comprises heating the first magnesium-based solid solution (201) at a temperature from 350 °C to 450 °C.

12. The method (100) of any one of claims 9 to 11, wherein an average first grain size within the first magnesium-based solid solution is larger than an average second grain size within the second magnesium-based solid solution, and the average second grain size is from 4 µm to 34 µm.

13. The method (100) of any one of claims 9 to 12, wherein the severe plastic deformation process comprises pressing the first magnesium-based solid solution (201) to pass through an angled channel (202), and the angled channel (202) has a bent angle (*ϕ*) from 90° to 120°.

14. The method (100) of any one of claims 9 to 13, wherein the severe plastic deformation process comprises repeatedly pressing the first magnesium-based solid solution (201) to pass through an angled channel (202), and a repeat number is from 4 times to 8 times.

15. The method (100) of any one of claims 9 to 14, wherein the high energy ball milling process is performed by a high energy ball milling machine, and a rotating speed of the high energy ball milling machine is from 200 rpm to 500 rpm.
